# EUROPEAN PATENT SPECIFICATION

(11) **EP 0 487 753 B1**
(45) Date of publication and mention of the grant of the patent: **09.11.1994**
(21) Application number: 91911366.2
(22) Date of filing: 19.06.1991
(51) Int. Cl.: B60R 21/20, B29C 53/06

(54) **MODULE COVER FOR AIR BAG DEVICE**
DECKELMODUL FÜR EINE LUFTSACKVORRICHTUNG
COUVERCLE MODULAIRE POUR DISPOSITIF DE COUSSINET PNEUMATIQUE DE SECURITE

(30) Priority: 20.06.1990 JP 161798/90
(43) Date of publication of application: 03.06.1992
(73) Proprietor: TAKATA CORPORATION, Minato-ku, Tokyo 106 (JP)
(72) Inventor: ZUSHI, Takayasu, Hikone-shi, Shiga 522 (JP)
(74) Representative: Goddard, David John
(86) International application number: JP9100821
(87) International publication number: WO9119630

(56) References cited:
- DE-U- 9 001 948
- PATENT ABSTRACTS OF JAPAN vol. 12, no. 459 (M-770)(3306) 2 December 1988 & JP-A-63 184 548

## Description

### TECHNICAL FIELD

The present invention relates to a modular cover for containing an air bag which is deployed and inflated when impact or deformation is sensed during a crash. A modular cover according to the preambles of claims 1 and 4 is known, for example, from DE-U-90 01 948.

### BACKGROUND ART

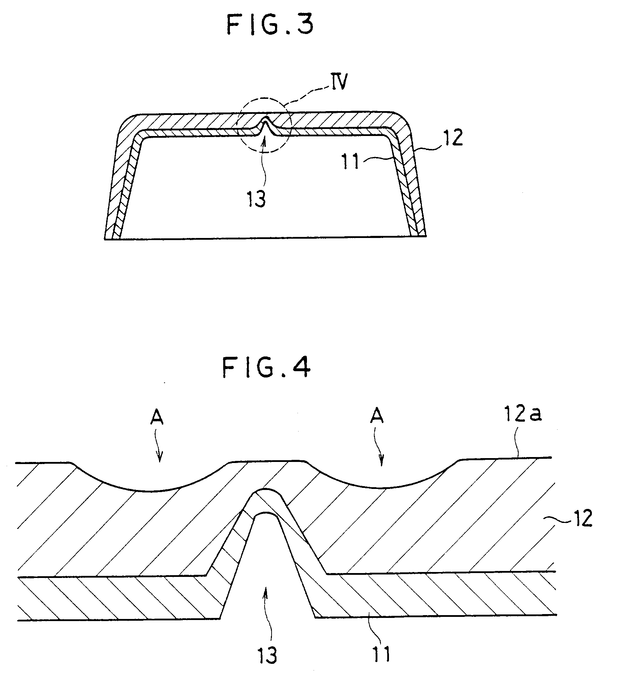

As shown in Fig. 3, a prior art modular cover includes a rigid inner layer 11, and a flexible outer layer 12. A tear line 13 is formed to permit the modular cover to rupture when an air bag is deployed. This modular cover is typically made by a two-color molding process in which two resins are separately introduced into molds.

When a two-color molding process is used to mold a modular cover composed of two layers, inner and outer layers as shown in Fig. 3, a molded modular cover may have a shrunk surface (sinkmarks) during curing of resins. This presents the following problems.

When a modular cover as shown in Fig. 3 is made by a two-color molding process, sinkmarks (surface contraction) may appear when the outer layer 12 is molded, as shown in Fig. 4. Fig. 4 is an enlarged view of a portion indicated as IV in Fig. 3. The outer layer 12 has a surface 12a in which recesses A are formed along a groove 13. This impairs the esthetic appearance of the modular cover.

### DISCLOSURE OF THE INVENTION

It is an object of the present invention to overcome the problems encountered in the prior art, and to provide a modular cover for an air bag assembly, which is free from recesses which may, otherwise, be formed due to surface contraction while the outer layer of the modular cover is being molded.

According to the present invention, there is provided a modular cover for an air bag assembly comprising a rigid inner layer and a flexible outer layer. The modular cover is ruptured along a tear line. The tear line includes a projection raised from the inner layer at the junction of the inner layer with the outer layer, and a groove formed in the inner surface of the modular cover. The projection is substantially trapezoidal in transverse section and has inclined surfaces. The angle formed by the inclined surface and the junction adjacent to the projection is no more than 30°.

According to another aspect of the present invention, there is provided a modular cover for an air bag assembly comprising a rigid inner layer and a flexible outer layer. The modular cover is ruptured along a tear line. The tear line includes a projection raised from the inner layer at the junction of the inner layer with the outer layer, and a groove formed in the inner surface of the modular cover. The projection is convexly curved in transverse section and has a top. The angle formed by the junction and a line extending between the top of the projection and a point at which the projection merges with the junction is no more than 30°.

In the modular cover of the present invention, the junction between the inner layer and the outer layer adjacent to the tear line is inclined at a small angle or is curved. This reduces the effect of sinkmarks formed adjacent to the tear line. The resulting recesses in the outer layer are not noticeable as such.

### BRIEF DESCRIPTION OF THE DRAWINGS

Fig. 1 is an enlarged sectional view showing the principal part of a modular cover for an air bag assembly made according to one embodiment of the present invention;
Fig. 2 is an enlarged sectional view showing an alternative embodiment;
Fig. 3 is a sectional view of the prior art; and
Fig. 4 is an enlarged view of a portion indicated as at IV in Fig. 3.

### BEST MODE FOR CARRYING OUT THE INVENTION

The present invention will now be described by way of example with reference to the drawings.

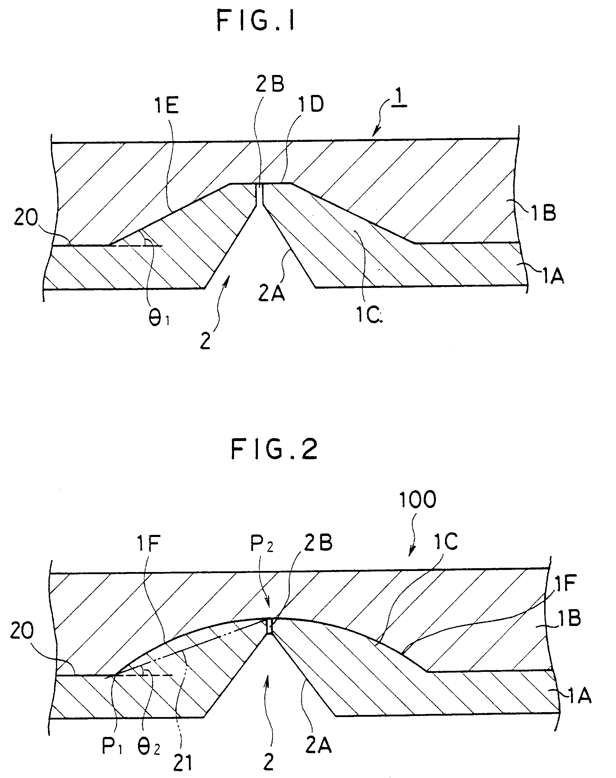

Figs. 1 and 2 are enlarged sectional views of tear lines formed in modular covers for an air bag assembly according to embodiments of the present invention.

Referring to Fig. 1, a modular cover 1 for an air bag assembly includes a rigid inner layer 1A, and a flexible outer layer 1B. A score line 2 includes a projection 1C, a groove 2A, and a slit 2B. Specifically, the projection 1C is raised from the junction 20 of the inner layer 1A with the outer layer 1B and has a substantially trapezoidal section. The projection 1C has a top 1D joined to the inner surface of the modular cover via the slit 2B and the groove 2A of a V-shaped section.

The projection 1C has inclined surfaces 1E. In this invention, an angle ϑ₁ formed by the inclined surface 1E and the junction 20 adjacent to the projection 1C is no more than 30°.

In Fig. 2, a modular cover 100 is identical in structure to the modular cover shown in Fig. 1, except that the projection 1C of the inner layer 1A has an ellipsoidal section. Like reference numerals indicate like or corresponding parts.

In Fig. 2, P₁ is a point at which a projection surface 1F merges with the junction 20 adjacent to the projection 1C. A line 21 extends between this point P₁ and a top P₂ of the projection. An angle ϑ₂ formed by the line 21 and the junction is no more than 30°.

By forming a projection so that the angle ϑ₁ or the angle ϑ₂ is no more than 30°, sinkmarks are formed during curing of the outer layer, but the resultant recesses may not gather around the tear line 2 and have greater widths (in a direction perpendicular to the tear line 2). Also, these recesses are shallow and thus, unnoticeable.

In the present invention, the angle ϑ₁ or the angle ϑ₂ is preferably in the range of between 5° and 20°.

The modular covers shown in Figs. 1 and 2 are illustrative only. The present invention is not limited to those shown in the drawing. The tear line may have other sections or shapes. In Fig. 2, the projection has an arcuate surface 1F, but may have a semiellipsoidal or other round surface. Additionally, the slit 2B may not terminate at the outer layer 1B.

### INDUSTRIAL APPLICABILITY

As described in detail, the modular cover of the present invention barely suffers from recesses which may occur due to sinkmarks during curing of the outer layer and can thus have a flat outer surface and provide good esthetic appearance.

## Claims

1. A modular cover (1) for an air bag assembly, comprising a rigid inner layer (1A) and a flexible outer layer (1B), said modular cover being ruptured along a tear line,
said tear line including a projection (1C) raised from the inner layer (1A) at the junction of said inner layer with said outer layer, and a groove (2A) formed in the inner surface of the modular cover, characterised in that said projection (1C) is substantially trapezoidal in transverse section and has inclined surfaces (1E), an angle (ϑ₁) formed by said inclined surface and said junction adjacent to the projection being no more than 30°.

2. The modular cover of claim 1, wherein said angle (ϑ₁) is in the range of between 5° and 20°.

3. The modular cover of either claim 1 or claim 2, wherein said groove (2A) has a V-shaped section.

4. A modular cover (100) for an air bag assembly, comprising a rigid inner layer (1A) and a flexible outer layer (1B), said modular cover being ruptured along a tear line,
said tear line including a projection (1C) raised from the inner layer at the junction of said inner layer with the outer layer, and a groove (2A) formed in the inner surface of the modular cover,
characterised in that said projection is convexly curved in transverse section and has a top (P₂), an angle (ϑ₂) formed by said junction and a line extending between said top (P₂) and a point (P₁) at which said projection merges with said junction being no more than 30°.

5. The modular cover of claim 4, wherein said angle (ϑ₂) is in the range of between 5° and 20°.

6. The modular cover of either claim 4 or claim 5, wherein said groove (2A) has a V-shaped section.

## Patentansprüche

1. Modulare Abdeckung (1) für eine Luftsackanordnung, umfassend eine steife innere Schicht (1A) und eine flexible äußere Schicht (1B), wobei die modulare Abdeckung längs einer Reißlinie aufgebrochen wird,
wobei die Reißlinie einen Vorsprung (1C) aufweist, der sich von der inneren Schicht (1A) an der Verbindungsstelle der inneren Schicht mit der äußeren Schicht erhebt, und eine Nut (2A), die in der inneren Oberfläche der modularen Abdeckung ausgebildet ist, dadurch **gekennzeichnet,** daß der Vorsprung (1C) im wesentlichen trapezförmig im Querschnitt ist und geneigte Oberflächen (1E) hat, wobei ein Winkel (Θ₁), der von der geneigten Oberfläche und der Verbindungsstelle benachbart dem Vorsprung gebildet wird, nicht mehr als 30° ist.

2. Modulare Abdeckung gemäß Anspruch 1, worin der Winkel (Θ₁) in dem Bereich zwischen 5° und 20° ist.

3. Modulare Abdeckung gemäß entweder Anspruch 1 oder Anspruch 2, worin die Nut (2A) einen V-förmigen Querschnitt hat.

4. Modulare Abdeckung (100) für eine Luftsackanordnung, umfassend eine steife innere Schicht (1A) und eine flexible äußere Schicht (1B), wobei die modulare Abdeckung längs einer Reißlinie aufgebrochen wird,
wobei die Reißlinie einen Vorsprung (1C) aufweist, der sich von der inneren Schicht an der Verbindungsstelle der inneren Schicht mit der äußeren Schicht erhebt, und eine Nut (2A), die in der inneren Oberfläche der modularen Abdeckung ausgebildet ist, dadurch **gekennzeichnet,** daß der Vorsprung konvex gekrümmt im Querschnitt ist und einen Scheitel (P₂) hat, wobei ein Winkel (Θ₂), der von der Verbindungsstelle und einer Linie, die sich zwischen dem Scheitel (P₂) und einem Punkt (P₁), an welchem der Vorsprung mit der Verbindungsstelle verschmilzt, gebildet wird, nicht mehr als 30° ist.

5. Modulare Abdeckung gemäß Anspruch 4, worin der Winkel (Θ₂) in dem Bereich zwischen 5° und 20° ist.

6. Modulare Abdeckung gemäß entweder Anspruch 4 oder Anspruch 5, worin die Nut (2A) einen V-förmigen Querschnitt hat.

## Revendications

1. Couvercle modulaire (1) pour un ensemble de sac gonflable, comprenant une couche intérieure rigide (1A) et une couche extérieure souple (1B), ledit couvercle modulaire se rompant selon une ligne de rupture,
ladite ligne de rupture comprenant une saillie (1C), qui part de la couche intérieure (1A) au niveau de la jonction de ladite couche intérieure avec ladite couche extérieure, et une rainure (2A), formée dans la surface intérieure du couvercle modulaire, caractérisé en ce que ladite saillie (1C) a une section transversale sensiblement trapézoïdale et des surfaces inclinées (1E), un angle (ϑ₁) formé par ladite surface inclinée et ladite jonction, adjacente à la saillie, n'étant pas supérieur à 30°.

2. Couvercle modulaire selon la revendication 1, dans lequel ledit angle (ϑ₁) se situe dans la fourchette de 5° à 20°.

3. Couvercle modulaire selon la revendication 1 ou la revendication 2, dans lequel ladite rainure (2A) a une section en forme de V.

4. Couvercle modulaire (100) pour un ensemble de sac gonflable, comprenant une couche intérieure rigide (1A) et une couche extérieure souple (1B), ledit couvercle modulaire se rompant selon une ligne de rupture,
ladite ligne de rupture comprenant une saillie (1C), qui part de la couche intérieure au niveau de la jonction de ladite couche intérieure avec la couche extérieure, et une rainure (2A) formée dans la surface intérieure du couvercle modulaire, caractérisé en ce que ladite saillie a une section transversale courbe convexe et un dessus (P₂), un angle (ϑ₂) formé par ladite jonction et une ligne s'étendant entre ledit dessus (P₂) et un point (P1), auquel ladite saillie rejoint ladite jonction, n'étant pas supérieur à 30°.

5. Couvercle modulaire selon la revendication 4, dans lequel ledit angle (ϑ₂) se situe dans la fourchette de 5° à 20°.

6. Couvercle modulaire selon la revendication 4 ou la revendication 5, dans lequel ladite rainure (2A) a une section transversale en forme de V.
